# EUROPEAN PATENT APPLICATION

(11) **EP 1 209 039 A2**
(43) Date of publication of application: **29.05.2002**
(21) Application number: 01127650.8
(22) Date of filing: 20.11.2001
(51) Int. Cl.: B60R 19/34

(54) **Shock absorbing member and bumper comprising the same**

(30) Priority: 21.11.2000 JP 2000354821
(71) Applicant: Aisin Seiki Kabushiki Kaisha, Kariya-shi, Aichi-ken (JP); TOYOTA JIDOSHA KABUSHIKI KAISHA, Aichi-ken 471-8571 (JP); AISIN KEIKINZOKU KABUSHIKI KAISHA, Shinminato-shi, Toyama-ken (JP)
(72) Inventor: Gotanda, Terutsugu, Kariya-shi, Aichi-ken 471-8571 (JP); Haneda, Shinichi, Kariya-shi, Aichi-ken 471-8571 (JP); Mori, Kazuo, Kariya-shi, Aichi-ken 471-8571 (JP); Morimoto, Kiyohito, Toyota-shi, Aichi-ken, 471-8571 (JP); Kajiwara, Kazumoto, Toyota-shi, Aichi-ken, 471-8571 (JP); Konishi, Yuzo, Toyota-shi, Aichi-ken, 471-8571 (JP); Sakai, Seiji, Toyota-shi, Aichi-ken, 471-8571 (JP); Nuno, Kazunobu, Shinminato-shi, Toyama-ken (JP); Azuchi, Kazunari, Shinminato-shi, Toyama-ken (JP)
(74) Representative: Leson, Thomas Johannes Alois, Dipl.-Ing.

(57) **Abstract**

A bumper includes a pair of hollow crash boxes (17, 34), each of which is located at one end of a bumper reinforce (16). When receiving axial load, each crash box (17, 34) is plastically deformed to absorb the axial load. An initial buckling portion (23, 33) is previously formed in each crash box (17, 34). Plastic deformation of each crash box (17, 34) due to axial load starts at the associated initial buckling portion (23, 33). This reduces axial load that is needed to start plastic deformation of each crash box (17, 34).

## Description

### BACKGROUND OF THE INVENTION

The present invention relates to a shock absorbing member and a bumper that are plastically deformed to absorb axial load due to impact energy.

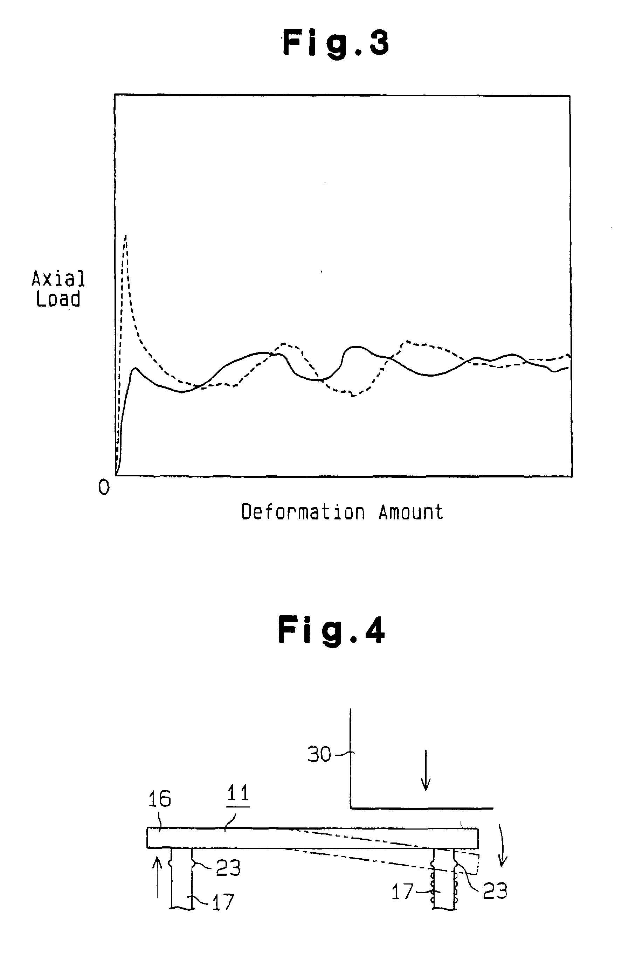

Various types of hollow shock absorbing members that are plastically deformed in the axial direction by axial load due to impact energy are known in the art. In such a shock absorbing member, a significantly great axial load needs to be applied to the absorbing member as shown in Fig. 3 to initiate plastic deformation (initial buckle deformation). Once a plastic deformation is started, the absorbing member consecutively repeats buckle deformations by relatively small axial loads with its shape turning into that of a bellows. In this manner, the absorbing member absorbs shock.

Such axial loads are transmitted to the outside through the shock absorbing member. Therefore, the great load at the initial stage is also transmitted to the outside through the absorbing member. Thus, the axial load that initiates plastic deformation (initial buckle deformation) of the shock absorbing member needs to be reduced. Accordingly, Japanese Unexamined Patent Publications No. 5-65076, No. 7-145842, No. 7-145843, No. 8-216917, No. 11-208518 disclose devices for reducing such load.

In the above publications, the shock absorbing members have a portion for concentrating stress, or a weakened portion. Plastic deformation due to axial load starts from the weakened portion, which reduces the axial load for initiating the plastic deformation. However, each of the shock absorbing members of the publications has more than one of the following drawbacks.
(1) Machining is complicated and difficult.
(2) Axial load for initiating plastic deformation is not sufficiently reduced.
(3) Due to design and structure, stable plastic deformation characteristics cannot be obtained.
(4) If holes are formed, consecutive buckle deformations create ruptures, which hinder reliable plastic deformations.
(5) Weld beads degrade the mechanical characteristics of a material. Therefore, when receiving a tension load, the shock absorbing member is likely to be broken.
(6) Attaching beads to a hollow body, the interior of which is divided into sections by walls, is complicated and difficult.
(7) Machining, such as cutting, increases the costs.

Accordingly, it is difficult to obtain stable and satisfactory characteristics and effective productivity at the same time.

### SUMMARY OF THE INVENTION

Accordingly, it is an objective of the present invention to provide a shock absorbing member and a bumper that improve the productivity and reduce axial load for initiating plastic deformation.

To achieve the foregoing and other objectives and in accordance with the purpose of the present invention, a hollow shock absorbing member, which is plastically deformed for absorbing axial load, is provided. The shock absorbing member includes an initial buckling portion at which plastic deformation due to axial load starts.

The present invention also provides a vehicle bumper including a bumper reinforce, a hollow crash box, and an initial buckling portion. The hollow crash box extends from the bumper reinforce. The crash box has a first end, which is coupled to the bumper reinforce, and a second end, which is coupled to the vehicle body. When receiving axial load, the crash box is plastically deformed to absorb the axial load. The initial buckling portion is previously formed in the crash box. Plastic deformation of the crash box due to axial load starts at the initial buckling portion.

Further, the present invention provides a method for manufacturing a hollow shock absorbing member, which is plastically deformed for absorbing axial load. The method includes preparing a hollow material that has a constant cross section in the axial direction, and applying axial load to the hollow material until the hollow material is plastically deformed so that a buckling portion is formed at any position in the axial direction of the hollow material. The hollow material, which has the buckling portion, is used as the shock absorbing member. Plastic deformation of the shock absorbing member due to axial load starts at the buckling portion.

Other aspects and advantages of the invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the presently preferred embodiments together with the accompanying drawings in which:
Fig. 1(a) is a front view illustrating a crash box according to a first embodiment of the present invention;
Fig. 1(b) is a side view showing the crash box of Fig. 1(a);
Fig. 1(c) is a plan view showing the crash box of Fig. 1(a);
Fig. 1(d) is a perspective view showing the crash box of Fig. 1(a);
Fig. 2 is a perspective view illustrating a shock absorbing member, which includes the crash boxes of Fig. 1, when applied to the front portion of an automobile;
Fig. 3 is a graph showing the relationship between axial load and deformation of the crash box shown in Fig. 1;
Fig. 4 is a diagrammatic view showing the operation of the shock absorbing member shown in Fig. 2;
Fig. 5(a) is a front view illustrating a crash box according to a second embodiment of the present invention;
Fig. 5(b) is a side view showing the crash box of Fig. 5(a);
Fig. 5(c) is a plan view showing the crash box of Fig. 5(a);
Fig. 5(d) is a perspective view showing the crash box of Fig. 5(a);
Fig. 6 is a diagrammatic front view illustrating a hollow material for forming a crash box according to a third embodiment of the present invention; and
Fig. 7 is a diagrammatic front view illustrating a hollow material for forming a crash box according to a fourth embodiment of the present invention.

### DETAILED DESCRIPTION OF THE PREFERRED EMBODIMENTS

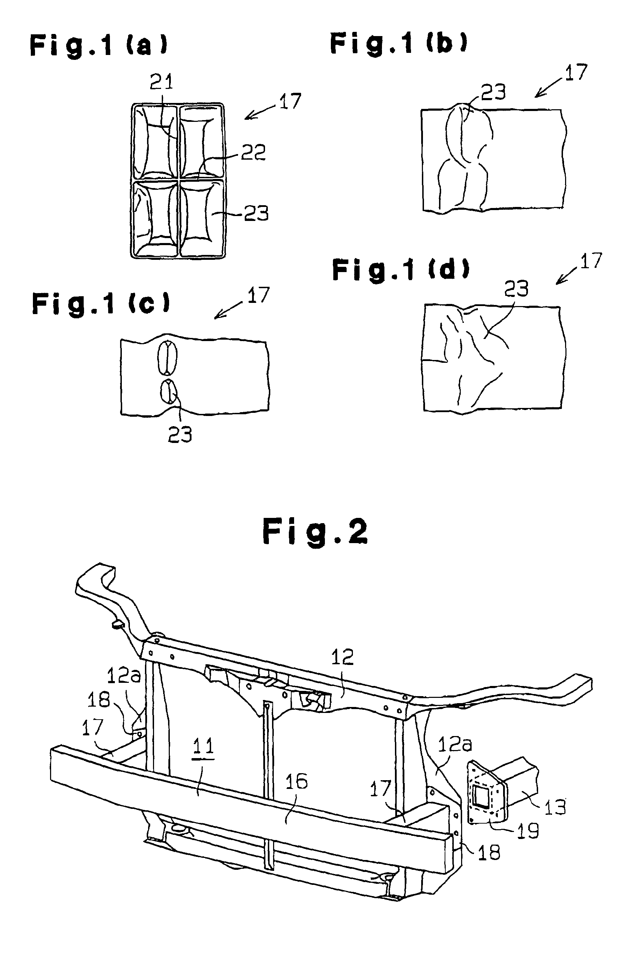

A first embodiment of the present invention will now be described with reference to Figs. 1 to 4. In this embodiment, the present invention is applied to the front portion of a vehicle.

Fig. 2 is a perspective view illustrating the front portion of the vehicle, to which the present embodiment is applied. A bumper frame 11, which is the framework of a bumper, a radiator support 12, and a pair of hollow side members 13, which form part of the vehicle body, are located at the front portion.

The bumper frame 11 includes a bumper reinforce 16 and a pair of shock absorbing members, which are crash boxes 17 in this embodiment. The bumper reinforce 16 extends laterally with respect to the vehicle body. Each crash box 17 is coupled to one end of the bumper reinforce 16. The axis of each crash box 17 extends toward the rear of the vehicle. A crash box bracket 18 for bolts is located at the rear end of each crash box 17.

The radiator support 12 is substantially rectangular and fixed to the vehicle body. A pair of radiator support brackets 12a protrudes laterally from the sides of the radiator support 12. Each radiator support bracket 12a corresponds to a crash box bracket 18. Each crash box bracket 18 faces a radiator support bracket 12a.

Each side member 13 has a rectangular cross section and the axis of the side member 13 is aligned with that of the corresponding crash box 17. A bolt bracket 19 is located at the front end of each side member 13. The bolt bracket 19 corresponds to the crash box bracket 18 of the corresponding crash box 17. Thus, the bumper frame 11 is fixed to the vehicle body by securing the crash box brackets 18 of the crash boxes 17 to the bolt brackets 19 of the side members 13 through the radiator support brackets 12a of the radiator support 12.

If a shock due to a collision is applied to the vehicle from the front, the shock is transmitted to the side members 13 of the vehicle body through the crash boxes 17 of the bumper frame 11. At this time, each crash boxes 17 repeats buckle deformations along the axis and absorbs the shock that is transmitted to the body.

The structure of the crash boxes 17 will now be described with reference to Figs. 1(a) to (d). As shown in Fig. 1(a), each crash box 17 is hollow and has a substantially rectangular cross section. Also, each crash box 17 has first and second partitions 21, 22. The partitions 21, 22 extend along the axis of the crash box 17 and are perpendicular to each other. The partitions 21, 22 divide the space in the crash box 17 into four sections such that the crash box 17 has a constant cross section along the axis. An initial buckling portion 23 is formed at a part of each crash box 17 that is close to the bumper reinforce 16. Plastic deformation of each crash box 17 due to an axial load starts at the initial buckling portion 23. The initial buckling portions 23 are formed in the following process. Hollow material for the crash boxes 17, which has a constant cross section in the axial direction, is formed, for example, by extruding aluminum alloy. Then, a static axial load is applied to the hollow material so that the material is plastically deformed, or so that an initial buckling occurs.

The initial buckling portion 23 is formed accordingly. In other words, the iniLial buckling portion 23 is a plastically deformed portion that is formed by applying a significantly great axial load to the hollow material. The initial buckling portion 23 extends not only on the four sides of the crash box 17 but also on the ridgelines (corners) defined by the sides. Projections and recess, which form the initial buckling portion 23, are smoothly connected to the other parts of the corresponding crash box 17.

The deformation characteristics of the crash boxes 17 will now be described with reference to Fig. 3. Solid line in Fig. 3 represents the relationship between axial load acting on the crash box 17 and the deformation amount of the crash box 17. As described above, each crash box 17 has the initial buckling portion 23, at which plastic deformation due to axial load starts. When axial load is applied to the crash box 17, plastic deformation of the crash box 17 starts at the initial buckling portion 23 and progresses to a portion adjacent to the initial buckling portion 23. Therefore, the initial load that is required to start plastic deformation of the crash box 17 is decreased. As shown in Fig. 3, the peak value of the axial load in the initial stage is reduced. Thus, in the initial stage of a collision in which a shock is applied from the front due to a vehicle collision, a shock having a significant peak value is not transmitted to the vehicle body (the side members 13) through the crash boxes 17. In other words, the impact energy is effectively lessened.

The deformation of the bumper frame 11 when a vehicle that has the crash boxes 17 (the bumper frame 11) is subjected to an offset collision will be described with reference to Fig. 4. When a frontal impact is given to a side portion (right side as viewed in Fig. 4) is applied to the bumper frame 11 due to a collision with an oncoming vehicle 30, only the crash box 17 located at the colliding part of the bumper frame 11 receives axial load. The crash box 17 is plastically deformed in the above described manner. The bumper reinforce 16 is bent due to the plastic deformation of the right crash box 17 as shown in Fig. 4. The bending, or the moment, of the bumper reinforce 16 applies tension load to the left crash box 17. The left crash box 17 absorbs the tension load by expanding the initial buckling portion 23. Therefore, the bumper reinforce 16 is not separated from the left crash box 17 by the tension load applied to the left crash box 17.

The embodiment illustrated in Figs. 1(a) to 4 has the following advantages.

(1) In the above illustrated embodiment, each crash box 17 has the initial buckling portion 23, at which plastic deformation starts when the crash box 17 receives axial load. Therefore, when the vehicle collide against something and each crash boxes 17 receives axial load, the crash box 17 starts plastic deformation at a portion that is adjacent to the initial buckling portion 23. Thus, the initial axial load that is needed to start plastic deformation of the crash box 17 is reduced. Also, at the initial stage of a crash when the vehicle collides with another vehicle, an impact that has a significant peak value is not transmitted to the vehicle body (the side members 13) through the crash boxes 17. Accordingly, the impact energy is reduced.

The initial buckling portion 23 is easily formed by applying axial load to a hollow material. In other words, there is no need to prepare a special die for forming the crash box 17 having the initial buckling portion 23. Thus, the productivity is improved and the cost is reduced. Further, since no heat is applied to the material to form the initial buckling portion 23, the mechanical characteristics of the crash box 17 are not degraded. Also, since no holes need be formed in the crash box 17 to form the initial buckling portion 23, no rupture occurs in the crash box 17.

(2) In the illustrated embodiment, the crash boxes 17 are located at the side portions of the bumper reinforce 16. Thus, when the vehicle is subjected to an offset collision, only the crash box 17 that corresponds to the collided part receives axial load. At this time, the collided crash box 17 is plastically deformed in the above described manner. The moment of the bumper reinforce 16 due to the plastic deformation of the collided crash box 17 applies tension load to the other crash box 17. The applied tension load is absorbed as the crash box 17 expands the initial buckling portion 23. Thus, the bumper reinforce 16 is prevented from being separated from the stretched crash box 17 by the tension load.

(3) The initial buckling portion 23 is located at a portion of each crash box 17 that is close to the bumper reinforce 16. Therefore, when the vehicle collides against something and axial load is applied to each crash box 17, plastic deformation of each crash box 1/ starts from the initial buckling portion 23 and progresses toward the vehicle body (the side member 13). The part of each crash box 17 that faces the vehicle body is located at the last stage of the shock absorption by the plastic deformation. Thus, the part of each crash box 17 that is located adjacent to the vehicle body does not receive great load in the initial stages of the collision. In the first stages of collision, the part of each crash box 17 that faces the vehicle body is not bent. Therefore, the crash boxes 17 reliably absorb shock.

It should be apparent to those skilled in the art that the present invention may be embodied in many other specific forms without departing from the spirit or scope of the invention. Particularly, it should be understood that the invention may be embodied in the following forms.

As long as an initial buckling portion is formed in a hollow material, a crash box may have any cross-sectional shape. Even if the cross-sectional shape is changed, the same advantages as the embodiment shown in Figs. 1(a) to 4 are obtained.

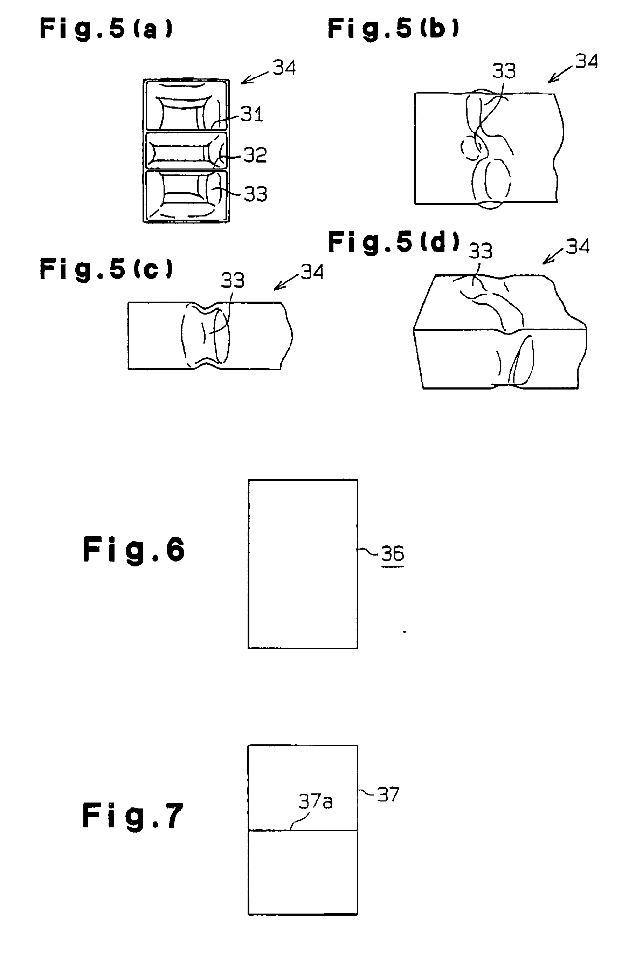

For example, a crash box 34 according to a second embodiment shown in Figs. 5(a) to 5(d) has first and second partitions 31, 32, which are parallel to each other. Like the crash box 17 of the first embodiment, the crash box 34 has an initial buckling portion 33.

A third embodiment shown in Fig. 6 relates to a hollow material 36, which has a substantially rectangular cross section and no partitions. Further, a fourth embodiment shown in Fig. 7 relates to a hollow material 37, which has a substantially rectangular cross section and a single partition 37a. When an initial buckling portion is formed either in the hollow material 36 or 37, a crash box that has the same advantages as the crash box 17 of the first embodiment will be formed. Figs. 6 and 7 diagrammatically show the materials 36, 37 only by solid lines.

In the first embodiments, the shock absorbing members, or the crash boxes 17, are made with aluminum alloy. However, the crash boxes 17 may be made with a different material. In this case, the same advantages as the first embodiment will be obtained.

In the first embodiment, the crash boxes 17 are hollow and formed by extrusion. However, the crash boxes 17 may be formed through other methods, for example, by bending or coupling sheet metal. In this case, the same advantages as the first embodiment will be obtained.

In the first embodiment, the bumper frame 11 and the side members 13 are coupled to each other by the radiator support 12. However, the bumper frame 11 may be directly coupled to the side members 13.

In the first embodiment, the present invention is applied to the front bumper (the bumper frame 11) of the vehicle. However, the present invention may be applied to the rear bumper of a vehicle. In this case, the same advantages as the first embodiment will be obtained.

In the first embodiments, the present invention is applied to the front bumper (the bumper frame 11) of a vehicle. However, the present invention may be applied to other members of a vehicle, such as the front or rear side members of a vehicle. Further, the present invention may be applied to a constructional material. In this case, the advantage (1) of the first embodiment is obtained.

Therefore, the present examples and embodiments are to be considered as illustrative and not restrictive and the invention is not to be limited to the details given herein, but may be modified within the scope and equivalence of the appended claims.

A bumper includes a pair of hollow crash boxes (17, 34), each of which is located at one end of a bumper reinforce (16). When receiving axial load, each crash box (17, 34) is plastically deformed to absorb the axial load. An initial buckling portion (23, 33) is previously formed in each crash box (17, 34). Plastic deformation of each crash box (17, 34) due to axial load starts at the associated initial buckling portion (23, 33). This reduces axial load that is needed to start plastic deformation of each crash box (17, 34).

## Claims

1. A hollow shock absorbing member, which is plastically deformed for absorbing axial load, **characterized in that** the shock absorbing member includes an initial buckling portion (23, 33) aL which plastic deformation due to axial load starts.

2. A vehicle bumper comprising:
a bumper reinforce (16); and
a hollow crash box (17, 34), which extends from the bumper reinforce (16), wherein the crash box (17, 34) has a first end, which is coupled to the bumper reinforce (16), and a second end, which is coupled to the vehicle body, and wherein, when receiving axial load, the crash box (17, 34) is plastically deformed to absorb the axial load, **being**
**characterized by:**
an initial buckling portion (23, 33), which is previously formed in the crash box (17, 34), wherein plastic deformation of the crash box (17, 34) due to axial load starts at the initial buckling portion (23, 33).

3. The bumper according to claim 2, **characterized in that** the bumper reinforce (16) extends laterally relative to the vehicle, and wherein the crash box (17, 34) extends along the front-rear direction of the vehicle.

4. The bumper according to claims 2 or 3, **characterized in that** the initial buckling portion (23, 33) is close to the first end of the crash box (17, 34).

5. The bumper according to any one of claims 2 to 4, **characterized in that** the initial buckling portion (23, 33) extends along the entire circumference of a predetermined portion in the axial direction of the crash box (17, 34).

6. The bumper according to any one of claims 2 to 5, **characterized in that** the crash box (17, 34) is one of a pair of crash boxes (17, 34), each of which is located at one end of the bumper reinforce (16).

7. A method for manufacturing a hollow shock absorbing member, which is plastically deformed for absorbing axial load, **characterized by:**
preparing a hollow material that has a constant cross section in the axial direction; and
applying axial load to the hollow material until the hollow material is plastically deformed so that a buckling portion (23, 33) is formed at any position in the axial direction of the hollow material, wherein the hollow material, which has the buckling portion (23, 33), is used as the shock absorbing member, and wherein plastic deformation of the shock absorbing member due to axial load starts at the buckling portion (23, 33).

8. The method according to claim 7, **characterized in that** the hollow material is formed by extruding metal.
